# EUROPEAN PATENT SPECIFICATION

(11) **EP 3 951 244 B1**
(45) Date of publication and mention of the grant of the patent: **18.12.2024**
(21) Application number: 19922629.1
(22) Date of filing: 05.04.2019
(51) Int. Cl.: F17C 13/08, B63B 25/16

(54) **LIQUEFIED GAS STORAGE STRUCTURE AND LIQUEFIED GAS CARRIER SHIP**
FLÜSSIGGASSPEICHERSTRUKTUR UND FLÜSSIGGASTRANSPORTSCHIFF
STRUCTURE DE STOCKAGE DE GAZ LIQUÉFIÉ ET NAVIRE TRANSPORTEUR DE GAZ LIQUÉFIÉ

(43) Date of publication of application: 09.02.2022
(73) Proprietor: KAWASAKI JUKOGYO KABUSHIKI KAISHA, Chuo-ku Kobe-shi Hyogo 650-8670 (JP)
(72) Inventor: KAWAMOTO, Hideki, Hyogo 650-8670 (JP); IMAI, Tatsuya, Hyogo 650-8670 (JP); MASHIRO, Keisuke, Hyogo 650-8670 (JP); OKUMURA, Kentaro, Hyogo 650-8670 (JP); FUJIMURA, Ryohei, Hyogo 650-8670 (JP); TANAKA, Kazuo, Hyogo 650-8670 (JP); KOUZAKI, Daisuke, Hyogo 650-8670 (JP); NAKADO, Hiroki, Hyogo 650-8670 (JP); MURAGISHI, Osamu, Hyogo 650-8670 (JP); SAKANO, Yoshinobu, Hyogo 650-8670 (JP)
(74) Representative: Dehns
(86) International application number: PCT/JP2019/015226
(87) International publication number: WO 2020/202577

(56) References cited:
- WO-A1-2014/132661
- WO-A1-2017/108756
- WO-A1-2017/199735
- JP-A- 2017 194 166
- JP-A- 2017 207 085
- JP-A- H1 182 889
- JP-A- H11 278 584
- JP-A- H11 278 584
- JP-A- S5 490 615
- JP-A- S5 490 615
- JP-U- S5 056 254
- JP-U- S55 112 198
- US-A- 3 968 764

## Description

### Technical Field

The present invention relates to a liquefied gas storage structure and a liquefied gas carrier ship including the liquefied gas storage structure.

### Background Art

Tanks storing liquefied gases such as LNG and liquefied hydrogen have been conventionally known. For example, Patent Literature 1 discloses a liquefied hydrogen carrier including a spherical tank mounted on the hull of the carrier ship to store liquefied hydrogen.

In this liquefied hydrogen carrier ship, the tank is supported by a tubular skirt rising from the floor surface of the hull of the carrier ship. The outer surface of the tank is entirely covered by an insulating layer.

JP H11 278584 A discloses an inner tank supporting structure of a double shell storage tank for storing low temperature liquid, low temperature high pressure gas, low temperature liquefied gas and the like.

### Citation List

### Patent Literature

PTL 1: Japanese Laid-Open Patent Application Publication (Translation of PCT Application) No. 2019-501064

### Summary of Invention

### Technical Problem

However, the liquefied hydrogen carrier ship disclosed in Patent Literature 1 has the problem of significant heat penetration from the floor surface into the tank through the skirt.

It is therefore an object of the present invention to provide a liquefied gas storage structure that can reduce heat penetration from a floor surface into a tank and a liquefied gas carrier ship including the liquefied gas storage structure.

### Solution to Problem

In order to solve the above problem, a liquefied gas storage structure according to one aspect of the present invention includes: a double-shell tank including a spherical inner shell storing a liquefied gas and an outer shell enclosing the inner shell; a first support member rising from a floor surface and supporting the outer shell; and a second support member supporting the inner shell, wherein: the first support member is a tubular skirt; the second support member is a tubular skirt and has a diameter different from that of the first support member; and the second support member rises from an inner surface of the outer shell at a location different from that of the first support member.

A liquefied gas carrier ship of the present invention includes: a hull; a double-shell tank including a spherical inner shell storing a liquefied gas and an outer shell enclosing the inner shell; a first support member rising from a floor surface of the hull and supporting the outer shell; and a second support member rising from an inner surface of the outer shell at a location different from that of the first support member, the second support member supporting the inner shell.

In the above configuration, the heat penetration route from the floor surface to the inner shell includes the first support member, the portion of the outer shell that is located between the first and second support members, and the second support member. Thus, the length of the heat penetration route can be increased by an amount corresponding to the distance between the portions of the first and second support members that extend along the outer shell. As such, the heat penetration from the floor surface into the double-shell tank can be reduced.

For example, the outer shell may be spherical, the second support member may be joined to the inner shell, and the first support member may be joined to the outer shell.

The second support member may include an upper portion made of the same material as the inner shell, a lower portion made of the same material as the outer shell, and a middle portion made of a material having a lower heat conductivity than the materials of the inner and outer shells. In this configuration, the second support member can easily be joined to the inner and outer shells, and heat transfer through the second support member can be hindered by the middle portion of the second support member.

For example, the material of the inner shell and the upper portion of the second support member may be the same as the material of the outer shell and the lower portion of the second support member.

The upper and lower portions of the second support member may be shorter than the middle portion in an up-down direction. In this configuration, the heat penetration into the double-shell tank can be more reduced than in a configuration where the upper, middle, and lower portions are equal in length.

The floor surface may be a floor surface of a hull, and the first support member may include an upper portion made of the same material as the outer shell, a lower portion made of the same material as the hull, and a middle portion made of a material having a lower heat conductivity than the materials of the outer shell and the hull. In this configuration, the first support member can easily be joined to the outer shell and hull, and heat transfer through the first support member can be hindered by the middle portion of the first support member.

A space between the inner and outer shells may be filled with a boil-off gas generated by evaporation of the liquefied gas. In some cases where the space between the inner and outer shells is filled with a gas, the gas present between the inner and outer shells could be liquefied or solidified depending on the temperature of the liquefied gas stored in the inner shell 3. However, when the gas filling the space is the boil-off gas, liquefaction or solidification of the gas present between the inner and outer shells can be prevented.

For example, the liquefied gas storage structure may further include a heat insulator packed in a space between the inner and outer shells and covering an outer surface of the inner shell and the inner surface of the outer shell.

The liquefied gas storage structure may further include a heat insulator covering an outer surface of the outer shell. In this configuration, the distance from the inner shell to the outer shell and hence the diameter of the outer shell can be smaller than in a configuration where the outer surface of the outer shell is not covered by the heat insulator.

### Advantageous Effects of Invention

According to the present invention, heat penetration from a floor surface into a double-shell tank can be reduced.

### Brief Description of Drawings

FIG 1 is a cross-sectional view of a liquefied gas carrier ship including a liquefied gas storage structure according to one embodiment of the present invention.
FIG 2 is an enlarged view of a part shown in FIG 1.
FIG 3 is a cross-sectional view of a liquefied gas carrier ship including a liquefied gas storage structure according to a modification.
FIG 4 is a cross-sectional view of a liquefied gas carrier ship including a liquefied gas storage structure according to another modification.

### Description of Embodiments

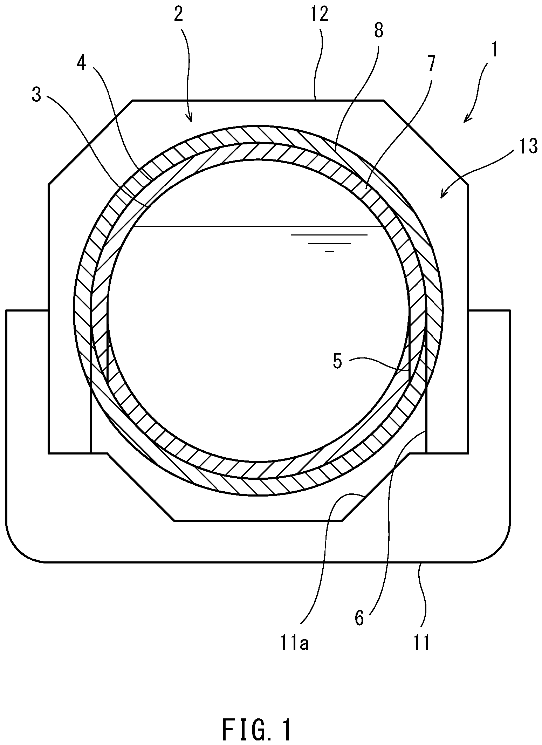

FIG 1 shows a liquefied gas carrier ship 1 including a liquefied gas storage structure according to one embodiment of the present invention. The liquefied gas carrier ship 1 includes a hull 11, a double-shell tank 2 mounted on the hull 11, and a tank cover 12 forming a holding space 13 around the double-shell tank 2 together with the hull 11.

In the present embodiment, the holding space 13 is filled with nitrogen gas. The holding space 13 may be filled with dry air or exhaust gas of an engine for propulsion.

The double-shell tank 2 includes an inner shell 3 storing a liquefied gas and an outer shell 4 enclosing the inner shell 3. For example, the liquefied gas is LNG, liquefied nitrogen, liquefied hydrogen, or liquefied helium.

The inner shell 3 is spherical. The inner shell 3 need not be spherically symmetric and may have a shape close to a spherically symmetric shape. For example, the inner shell 3 may have a shape differing from a spherically symmetric shape in that the inner shell 3 bulges upward and/or downward in the direction of 45 degrees with respect to the center of the inner shell 3. Alternatively, the inner shell 3 may have a shape with a short tubular element interposed between the upper and lower hemispheres.

In the present embodiment, the outer shell 4 is also spherical. The center of the outer shell 4 coincides with the center of the inner shell 3. Like the inner shell 3, the outer shell 4 need not be spherically symmetric and may have a shape close to a spherically symmetric shape. For example, like the inner shell 3, the outer shell 4 may have a shape differing from a spherically symmetric shape in that the outer shell 4 bulges upward and/or downward in the direction of 45 degrees with respect to the center of the outer shell 4. Alternatively, the outer shell 4 may have a shape with a short tubular element interposed between the upper and lower hemispheres.

In the present embodiment, the material of the outer shell 4 is the same as the material of the inner shell 3. The material of the outer shell 4 may be different from the material of the inner shell 3.

A first heat insulator 7 is packed in the space between the inner and outer shells 3 and 4. The first heat insulator 7 entirely covers the inner surface of the outer shell 4 and the outer surface of the inner shell 3. Further, the outer surface of the outer shell 4 is entirely covered by a second heat insulator 8.

For example, the first heat insulator 7 may be a foamed material made of a resin such as polyurethane (PU) or phenolic resin (PF), may be a granular material such as perlite or hollow glass spheres, or may be an inorganic fibrous material such as glass wool.

The second heat insulator 8 is, for example, a foamed material made of a resin such as polyurethane or phenolic resin. As described above, the holding space 13 is filled with nitrogen gas. Thus, in the case where the second heat insulator 8 is a foamed material, the nitrogen gas enters the second heat insulator 8 from the holding space 13, and the internal pores of the second heat insulator 8 are filled with the nitrogen gas. Nitrogen gas may be fed to the second heat insulator 8 from a gas generator (not shown). In the case where the holding space 13 is filled with dry air, the internal pores of the second heat insulator 8 may also be filled with dry air.

In the present embodiment, the space between the inner and outer shells 3 and 4 is filled with a boil-off gas generated by evaporation of the liquefied gas stored in the inner shell 3. The space between the inner and outer shells 3 and 4 may be filled with another gas that is not liquefied at the temperature of the liquefied gas stored in the inner shell 3. Alternatively, the space between the inner and outer shells 3 and 4 may be a vacuum.

Various methods can be used to fill the space between the inner and outer shells 3 and 4 with the boil-off gas. For example, an upper portion of the inner shell 3 may be provided with a communication hole. Alternatively, although not shown, a delivery pipe through which the boil-off gas is delivered from the inner shell 3 to another device may be provided with a branch pipe, and the distal end of the branch pipe may open into the space between the inner and outer shells 3 and 4.

A first support member 6 is disposed between a floor surface 11a of the hull 11 and the outer shell 4, and a second support member 5 is disposed between the outer shell 4 and the inner shell 3. The first support member 6 rises from the floor surface 11a and supports the outer shell 4. The second support member 5 rises from the inner surface of the outer shell 4 at a location different from that of the first support member 6, and supports the inner shell 3.

In the present embodiment, both the first and second support members 6 and 5 are tubular skirts having axes extending in the vertical direction. The upper end of the first support member 6 is joined to an equatorial portion of the outer shell 4 (the equatorial portion is a maximum diameter portion that is farthest from the vertical centerline of the outer shell 4). Likewise, the upper end of the second support member 5 is joined to an equatorial portion of the inner shell 3 (the equatorial portion is a maximum diameter portion that is farthest from the vertical centerline of the inner shell 3).

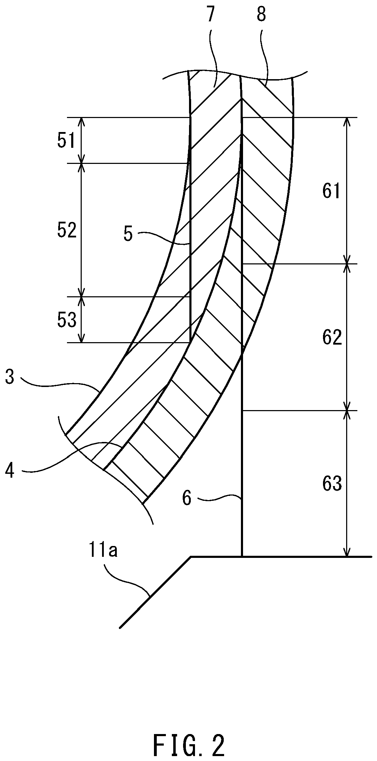

As shown in FIG 2, the first support member 6 includes an upper portion 61, a middle portion 62, and a lower portion 63. In the example shown, the upper, middle, and lower portions 61, 62, and 63 are equal in length in the up-down direction. However, the lengths of these portions may be changed as appropriate.

The upper portion 61 is made of the same material as the outer shell 4 (an example of the material is aluminum), and the lower portion 63 is made of the same material as the hull 11 (an example of the material is carbon steel). The middle portion 62 is made of a material having a lower heat conductivity than the materials of the outer shell 4 and hull 11 (an example of the material of the middle portion 62 is stainless steel). Although not shown, joints for dissimilar materials are disposed between the upper and middle portions 61 and 62 and between the middle and lower portions 62 and 63. The middle portion 62 may be made of the same material as the hull 11 or outer shell 4.

Likewise, the second support member 5 includes an upper portion 51, a middle portion 52, and a lower portion 53. In the example shown, the upper and lower portions 51 and 53 are shorter than the middle portion 52 in the up-down direction. However, the lengths of these portions may be changed as appropriate.

The upper portion 51 is made of the same material as the inner shell 3 (an example of the material is aluminum), and the lower portion 53 is made of the same material as the outer shell 4 (an example of the material is aluminum as mentioned above). The middle portion 52 is made of a material having a lower heat conductivity than the materials of the inner and outer shells 3 and 4 (an example of the material of the middle portion 52 is stainless steel). Although not shown, joints for dissimilar materials are disposed between the upper and middle portions 51 and 52 and between the middle and lower portions 52 and 53. The second support member 5 may be configured such that the upper, middle, and lower portions 51, 52, and 53 of the second support member 5 are integral with one another, and may be made of a material having a low heat conductivity over the region of the upper to lower portions 51 to 53 (an example of the material is stainless steel).

As described above, in the liquefied gas storage structure of the present embodiment, the heat penetration route from the floor surface 11a to the inner shell 3 includes the first support member 6, the portion of the outer shell 4 that is located between the first and second support members 6 and 5, and the second support member 5. Thus, the length of the heat penetration route can be increased by an amount corresponding to the distance between the portions of the first and second support members 6 and 5 that extend along the outer shell 4. As such, the heat penetration from the floor surface 11a into the double-shell tank 2 can be reduced.

Additionally, in the present embodiment, the upper and lower portions 51 and 53 of the second support member 5 are made of the same materials as the inner and outer shells 3 and 4, respectively. Thus, the second support member 5 can easily be joined to the inner and outer shells 3 and 4. Moreover, since the middle portion 52 of the second support member 5 has a lower heat conductivity than the upper and lower portions 51 and 53, heat transfer through the second support member 5 can be hindered by the middle portion 52.

Moreover, in the present embodiment, the upper and lower portions 51 and 53 of the second support member 5 are shorter than the middle portion 52. Thus, the heat penetration into the double-shell tank 2 can be more reduced than in the case where the upper, middle, and lower portions 51, 52, and 53 are equal in length.

Further, in the present embodiment, the upper and lower portions 61 and 63 of the first support member 6 are made of the same materials as the outer shell 4 and hull 11, respectively. Thus, the first support member 6 can easily be joined to the outer shell 4 and hull 11. Moreover, since the middle portion 62 of the first support member 6 has a lower heat conductivity than the upper and lower portions 61 and 63, heat transfer through the first support member 6 can be hindered by the middle portion 62.

Additionally, in the present embodiment, the space between the inner and outer shells 3 and 4 is filled with the boil-off gas. In some cases where the space between the inner and outer shells 3 and 4 is filled with a gas, the gas present between the inner and outer shells 3 and 4 could be liquefied or solidified depending on the temperature of the liquefied gas stored in the inner shell 3. However, when the gas filling the space is the boil-off gas as in the present embodiment, liquefaction or solidification of the gas present between the inner and outer shells 3 and 4 can be prevented.

### (Modifications)

The present invention is not limited to the embodiment described above, and various modifications can be made without departing from the gist of the present invention.

For example, the liquefied gas storage structure of the present invention need not be included in the liquefied gas carrier ship 1, and may be included in an onshore facility. That is, the floor surface from which the first support member 6 rises may be a ground surface.

The space between the inner and outer shells 3 and 4 need not be packed with the first heat insulator 7. For example, in the case where the space between the inner and outer shells 3 and 4 is a vacuum, only the outer surface of the inner shell 3 may be covered by a layered vacuum heat insulator including a stack of alternating radiation shielding films and spacers.

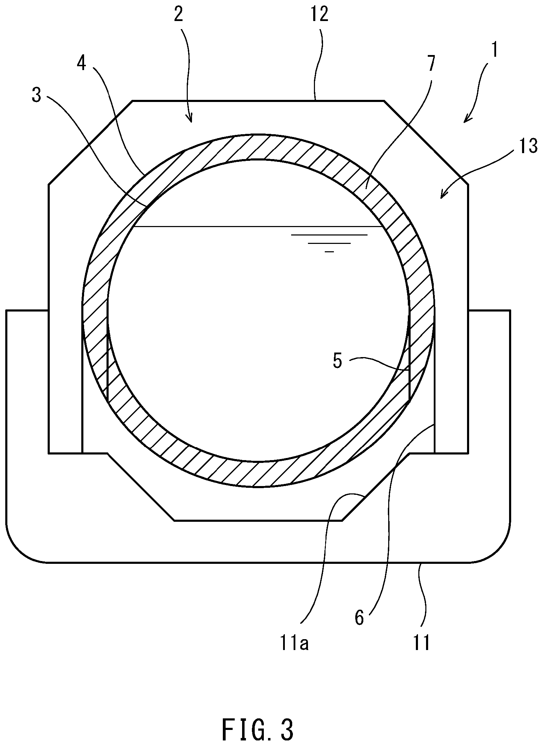

Further, the outer surface of the outer shell 4 need not be covered by the second heat insulator 8, and may be bare as shown in FIG 3. However, in this case, the heat insulation performance needs to be ensured by increasing the distance from the inner shell 3 to the outer shell 4. In contrast, when the outer surface of the outer shell 4 is covered by the second heat insulator 8 as in the embodiment described above, the distance from the inner shell 3 to the outer shell 4 and hence the diameter of the outer shell 4 can be smaller than when the outer surface of the outer shell 4 is not covered by the second heat insulator 8.

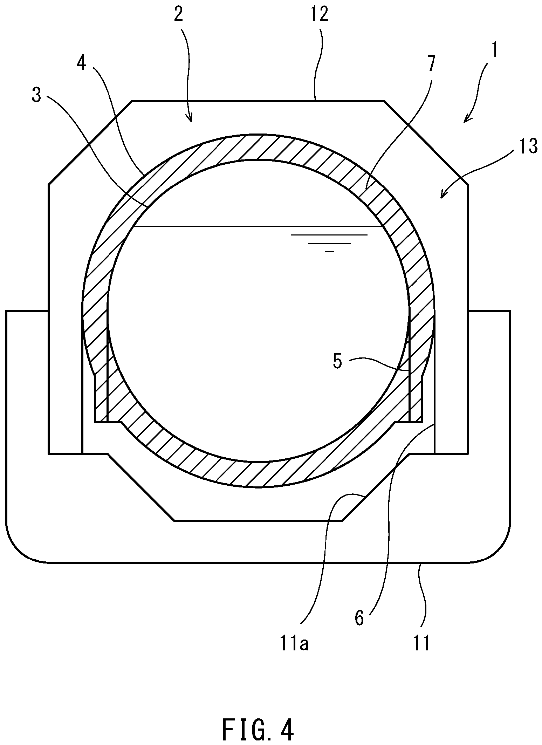

Additionally, the outer shell 4 need not be spherical and may have a shape as shown in FIG 4.

### Reference Signs List

1 liquefied gas carrier ship
11 hull
11a floor surface
2 double-shell tank
3 inner shell
4 outer shell
5 second support member
51 upper portion
52 middle portion
53 lower portion
6 first support member
61 upper portion
62 middle portion
63 lower portion
7, 8 heat insulator

## Claims

1. A liquefied gas storage structure comprising:
a double-shell tank (2) including a spherical inner shell (3) storing a liquefied gas and an outer shell (4) enclosing the inner shell;
a first support member (6) rising from a floor surface (11a) and supporting the outer shell; and
a second support member (5) supporting the inner shell, **characterized in that**:
the first support member (6) is a tubular skirt;
the second support member (5) is a tubular skirt and has a diameter different from that of the first support member (6); and **in that**
the second support member (5) rises from an inner surface of the outer shell (4) at a location different from that of the first support member (6).

2. The liquefied gas storage structure according to claim 1, wherein
the outer shell (4) is spherical,
the second support member (5) is joined to the inner shell (3), and
the first support member (6) is joined to the outer shell (4).

3. The liquefied gas storage structure according to claim 1 or 2, wherein the second support member (5) includes an upper portion (51) made of the same material as the inner shell (3), a lower portion (53) made of the same material as the outer shell (4), and a middle portion (52) made of a material having a lower heat conductivity than the materials of the inner and outer shells (3, 4).

4. The liquefied gas storage structure according to claim 3, wherein the material of the inner shell (3) and the upper portion (51) of the second support member (5) is the same as the material of the outer shell (4) and the lower portion (53) of the second support member (5).

5. The liquefied gas storage structure according to claim 3 or 4, wherein the upper and lower portions (51, 53) of the second support member (5) are shorter than the middle portion (52) in an up-down direction.

6. The liquefied gas storage structure according to any one of claims 1 to 5, wherein
the floor surface (11a) is a floor surface of a hull (11), and
the first support member (6) includes an upper portion (61) made of the same material as the outer shell (4), a lower portion (63) made of the same material as the hull (11), and a middle portion (62) made of a material having a lower heat conductivity than the materials of the outer shell (4) and the hull (11).

7. The liquefied gas storage structure according to any one of claim 1 to 6, wherein a space between the inner and outer shells (3, 4) is filled with a boil-off gas generated by evaporation of the liquefied gas.

8. The liquefied gas storage structure according to any one of claims 1 to 7, further comprising a heat insulator (7) packed in a space between the inner and outer shells (3, 4) and covering an outer surface of the inner shell (3) and the inner surface of the outer shell (4).

9. The liquefied gas storage structure according to any one of claims 1 to 8, further comprising a heat insulator (8) covering an outer surface of the outer shell (4).

10. A liquefied gas carrier ship (1) comprising:
a hull (11); and
the liquefied gas storage structure according to any preceding claim, wherein
the first support member (6) rises from a floor surface (11a) of the hull (11).

## Patentansprüche

1. Flüssiggasspeicherstruktur, umfassend:
einem doppelwandigen Behälter (2), der eine kugelförmige Innenwand (3), die ein Flüssiggas speichert, und eine Außenwand (4), die die Innenwand umschließt, beinhaltet;
ein erstes Tragelement (6), das von einer Bodenfläche (11a) vorsteht und die Außenwand trägt; und
ein zweites Tragelement (5), das die Innenwand trägt, **dadurch gekennzeichnet, dass**:
das erste Tragelement (6) ein rohrförmiger Mantel ist;
das zweite Tragelement (5) ein rohrförmiger Mantel ist und einen anderen Durchmesser als das erste Tragelement (6) aufweist; und dadurch, dass
das zweite Tragelement (5) von einer Innenfläche der Außenwand (4) an einer Stelle vorsteht, die sich von der des ersten Tragelements (6) unterscheidet.

2. Flüssiggasspeicherstruktur nach Anspruch 1, wobei
die Außenwand (4) kugelförmig ist,
das zweite Tragelement (5) mit der Innenwand (3) verbunden ist, und
das erste Tragelement (6) mit der Außenwand (4) verbunden ist.

3. Flüssiggasspeicherstruktur nach Anspruch 1 oder 2, wobei das zweite Tragelement (5) einen oberen Abschnitt (51) aus dem gleichen Material wie die Innenwand (3), einen unteren Abschnitt (53) aus dem gleichen Material wie die Außenwand (4) und einen mittleren Abschnitt (52) aus einem Material, das eine geringere Wärmeleitfähigkeit als die Materialien der Innen- und Außenwand (3, 4) aufweist, beinhaltet.

4. Flüssiggasspeicherstruktur nach Anspruch 3, wobei das Material der Innenwand (3) und des oberen Abschnitts (51) des zweiten Tragelements (5) das gleiche ist wie das Material der Außenwand (4) und des unteren Abschnitts (53) des zweiten Tragelements (5).

5. Flüssiggasspeicherstruktur nach Anspruch 3 oder 4, wobei der obere und der untere Abschnitt (51, 53) des zweiten Tragelements (5) kürzer sind als der mittlere Abschnitt (52) in einer Auf-Ab-Richtung.

6. Flüssiggasspeicherstruktur nach einem der Ansprüche 1 bis 5, wobei
die Bodenfläche (11a) eine Bodenfläche eines Rumpfes (11) ist, und
das erste Tragelement (6) einen oberen Abschnitt (61) aus demselben Material wie die Außenwand (4), einen unteren Abschnitt (63) aus demselben Material wie der Rumpf (11) und einen mittleren Abschnitt (62) aus einem Material, das eine geringere Wärmeleitfähigkeit als die Materialien der Außenwand (4) und des Rumpfs (11) aufweist, beinhaltet.

7. Flüssiggasspeicherstruktur nach einem der Ansprüche 1 bis 6, wobei ein Raum zwischen der Innen- und der Außenwand (3, 4) mit einem durch Verdampfung des Flüssiggases erzeugten Abdampf gefüllt ist.

8. Flüssiggasspeicher nach einem der Ansprüche 1 bis 7, der weiter einen Wärmeisolator (7) umfasst, der in einen Raum zwischen der Innen- und der Außenwand (3, 4) gepackt ist und eine Außenfläche der Innenwand (3) und die Innenfläche der Außenwand (4) bedeckt.

9. Flüssiggasspeicher nach einem der Ansprüche 1 bis 8, der weiter einen Wärmeisolator (8) umfasst, der eine Außenfläche der Außenwand (4) bedeckt.

10. Flüssiggastransportschiff (1), umfassend:
einen Rumpf (11); und
die Flüssiggasspeicherstruktur nach einem vorstehenden Anspruch, wobei
das erste Tragelement (6) von einer Bodenfläche (11a) des Rumpfes (11) vorsteht.

## Revendications

1. Structure de stockage de gaz liquéfié comprenant :
un réservoir à double coque (2) incluant une enveloppe intérieure sphérique (3) stockant un gaz liquéfié et une enveloppe extérieure (4) enfermant l'enveloppe intérieure ;
un premier élément de support (6) s'élevant d'une surface de plancher (11a) et supportant l'enveloppe extérieure ; et
un second élément de support (5) supportant l'enveloppe intérieure, **caractérisée en ce que** :
le premier élément de support (6) est une jupe tubulaire ;
le second élément de support (5) est une jupe tubulaire et présente un diamètre différent de celui du premier élément de support (6) ; et **en ce que**
le second élément de support (5) s'élève d'une surface intérieure de l'enveloppe extérieure (4) à un emplacement différent de celui du premier élément de support (6).

2. Structure de stockage de gaz liquéfié selon la revendication 1, dans laquelle
l'enveloppe extérieure (4) est sphérique,
le second élément de support (5) est relié à l'enveloppe intérieure (3), et
le premier élément de support (6) est relié à l'enveloppe extérieure (4).

3. Structure de stockage de gaz liquéfié selon la revendication 1 ou 2, dans laquelle le second élément de support (5) inclut une partie supérieure (51) constituée du même matériau que l'enveloppe intérieure (3), une partie inférieure (53) constituée du même matériau que l'enveloppe extérieure (4), et une partie médiane (52) constituée d'un matériau présentant une conductivité thermique inférieure à celle des matériaux des enveloppes intérieure et extérieure (3, 4).

4. Structure de stockage de gaz liquéfié selon la revendication 3, dans laquelle le matériau de l'enveloppe intérieure (3) et de la partie supérieure (51) du second élément de support (5) est le même que le matériau de l'enveloppe extérieure (4) et de la partie inférieure (53) du second élément de support (5).

5. Structure de stockage de gaz liquéfié selon la revendication 3 ou 4, dans laquelle les parties supérieure et inférieure (51, 53) du second élément de support (5) sont plus courtes que la partie médiane (52) dans une direction haut-bas.

6. Structure de stockage de gaz liquéfié selon l'une quelconque des revendications 1 à 5, dans laquelle
la surface de plancher (11a) est une surface de plancher d'une coque (11), et
le premier élément de support (6) inclut une partie supérieure (61) constituée du même matériau que l'enveloppe extérieure (4), une partie inférieure (63) constituée du même matériau que la coque (11), et une partie médiane (62) constituée d'un matériau présentant une conductivité thermique inférieure à celle des matériaux de l'enveloppe extérieure (4) et de la coque (11).

7. Structure de stockage de gaz liquéfié selon l'une quelconque des revendications 1 à 6, dans laquelle un espace entre les enveloppes intérieure et extérieure (3, 4) est rempli d'un gaz d'évaporation généré par l'évaporation du gaz liquéfié.

8. Structure de stockage de gaz liquéfié selon l'une quelconque des revendications 1 à 7, comprenant en outre un isolant thermique (7) placé dans un espace entre les enveloppes intérieure et extérieure (3, 4) et recouvrant une surface extérieure de l'enveloppe intérieure (3) et la surface intérieure de l'enveloppe extérieure (4).

9. Structure de stockage de gaz liquéfié selon l'une quelconque des revendications 1 à 8, comprenant en outre un isolant thermique (8) recouvrant une surface extérieure de l'enveloppe extérieure (4).

10. Navire transporteur de gaz liquéfié (1) comprenant :
une coque (11) ; et
la structure de stockage de gaz liquéfié selon une quelconque revendication précédente, dans lequel
le premier élément de support (6) s'élève d'une surface de plancher (11a) de la coque (11).
